(19) Europäisches Patentamt
European Patent Office
Office européen des brevets

(11) **EP 3 213 049 B1**

(12) **FASCICULE DE BREVET EUROPEEN**

(45) Date de publication et mention
de la délivrance du brevet:
**18.08.2021 Bulletin 2021/33**

(51) Int Cl.:
***G01N 15/02*** *(2006.01)*   ***G01N 15/14*** *(2006.01)*

(21) Numéro de dépôt: **15790511.8**

(86) Numéro de dépôt international:
**PCT/EP2015/075352**

(22) Date de dépôt: **30.10.2015**

(87) Numéro de publication internationale:
**WO 2016/066845 (06.05.2016 Gazette 2016/18)**

(54) **PROCÉDÉ ET SYSTÈME D'ESTIMATION D'UNE CONCENTRATION D'UNE ESPÈCE DANS UN MILIEU DE CULTURE PAR IMAGERIE SANS LENTILLE**

VERFAHREN UND SYSTEM ZUR SCHÄTZUNG DER KONZENTRATION EINER SUBSTANZ IN EINEM KULTURMEDIUM MITTELS BILDGEBUNG OHNE LINSE

METHOD AND SYSTEM FOR ESTIMATING A CONCENTRATION OF A SPECIES IN A CULTURE MEDIUM BY LENSLESS IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2014 FR 1460494**

(43) Date de publication de la demande:
**06.09.2017 Bulletin 2017/36**

(73) Titulaire: **Commissariat à l'Énergie Atomique et aux Énergies Alternatives
75015 Paris (FR)**

(72) Inventeur: **COUTARD, Jean-Guillaume
F-38660 Saint Pancrasse (FR)**

(74) Mandataire: **Lavoix
2, place d'Estienne d'Orves
75441 Paris Cedex 09 (FR)**

(56) Documents cités:
**WO-A1-96/12962   WO-A1-2011/049965**

• POHER V ET AL: "Lensfree in-line holographic detection of bacteria", ADVANCED MICROSCOPY TECHNIQUES II, SPIE, 1000 20TH ST. BELLINGHAM WA 98225-6705 USA, vol. 8086, no. 1, 9 juin 2011 (2011-06-09) , pages 1-7, XP060015100, DOI: 10.1117/12.889324

EP 3 213 049 B1

**Description**

La présente invention concerne un procédé d'estimation d'une concentration d'une espèce dans un milieu de culture. Ce procédé de détection est mis en oeuvre à l'aide d'un système d'estimation comportant une source de lumière, un substrat transparent et un photodétecteur matriciel, le substrat transparent étant disposé entre la source de lumière et le photodétecteur matriciel. Le milieu de culture comporte des particules biologiques.

L'invention concerne également un système d'estimation de la concentration de l'espèce dans le milieu de culture.

L'invention concerne notamment le domaine de l'imagerie dite sans lentille (de l'anglais *lensless imaging*), de par l'absence de lentille de focalisation du faisceau lumineux éclairant le substrat transparent.

On connaît du document WO 2008/090330 A1 un système d'imagerie sans lentille et un procédé associé permettant de déterminer la position ou le nombre d'objets, tels que des cellules, à l'intérieur du milieu de culture. Le système d'imagerie sans lentille est également utilisé pour suivre les mouvements de ces objets et/ou pour détecter une modification de ces objets, telle qu'une division cellulaire ou encore une adhésion de cellule entre elles. Ce système d'imagerie sans lentille permet alors d'effectuer une détection, un comptage et un suivi de cellules du milieu de culture.

Toutefois, un tel système d'imagerie sans lentille et un tel procédé associé ne permettent pas d'observer d'autres propriétés relatives au milieu de culture.

WO 96/12962 A1 décrit un procédé de détection d'un analyte, à l'aide d'un système d'imagerie, à partir d'une modification de motifs de diffraction de particules en relation avec la présence de l'analyte.

Le but de l'invention est alors de proposer un procédé et un système d'estimation d'une concentration d'une espèce dans le milieu de culture, par imagerie sans lentille.

À cet effet, l'invention a pour objet un procédé d'estimation selon la revendication 1 ou 2.

Ainsi, le procédé selon l'invention permet de calculer une estimation de la concentration de l'espèce dans le milieu de culture en fonction d'une intensité de pixels de l'image acquise, le milieu de culture changeant de couleur lors de la variation de ladite concentration.

L'invention concerne de manière générale l'estimation de concentrations d'espèces dans le milieu de culture qui, lorsqu'elles varient, entraînent un changement de couleur du milieu de culture, le changement de couleur étant dans certains cas obtenu via l'introduction dans le milieu de culture d'un réactif associé.

Par espèce, on entend une espèce chimique, en particulier une molécule, telle qu'un dérivé réactif de l'oxygène, également noté DRO ou encore ROS (de l'anglais *Reactive oxygen species*) ou un ion, tel que $H_3O^+$, $OH^-$, ou une espèce biologique, telle qu'une cellule, et en particulier une cellule vivante, ou une protéine. L'estimation de la concentration de l'espèce dans le milieu de culture correspond alors une estimation d'une propriété du milieu de culture. Ces propriétés sont notamment le pH lorsque l'espèce est l'ion $H_3O^+$ ou $OH^-$, une viabilité cellulaire lorsque l'espèce est une cellule vivante, une concentration en un dérivé réactif de l'oxygène. La concentration en un dérivé réactif de l'oxygène est parfois assimilée à un stress oxydatif du milieu de culture. L'invention concerne alors notamment le domaine de l'immuno cyto colorimétrie (ICC).

Par estimation de la concentration, on entend notamment le calcul d'une valeur estimée de ladite concentration, ou encore le calcul d'une variation de ladite concentration, c'est-à-dire la détection d'une augmentation (variation positive), d'une diminution (variation négative) ou encore d'une valeur inchangée (variation sensiblement nulle) de ladite concentration.

Suivant d'autres aspects avantageux de l'invention, le procédé d'estimation est selon l'une quelconque des revendications 3 à 14.

L'invention a également pour objet un système d'estimation selon la revendication 15 ou 16.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue en perspective d'un système d'estimation selon l'invention,

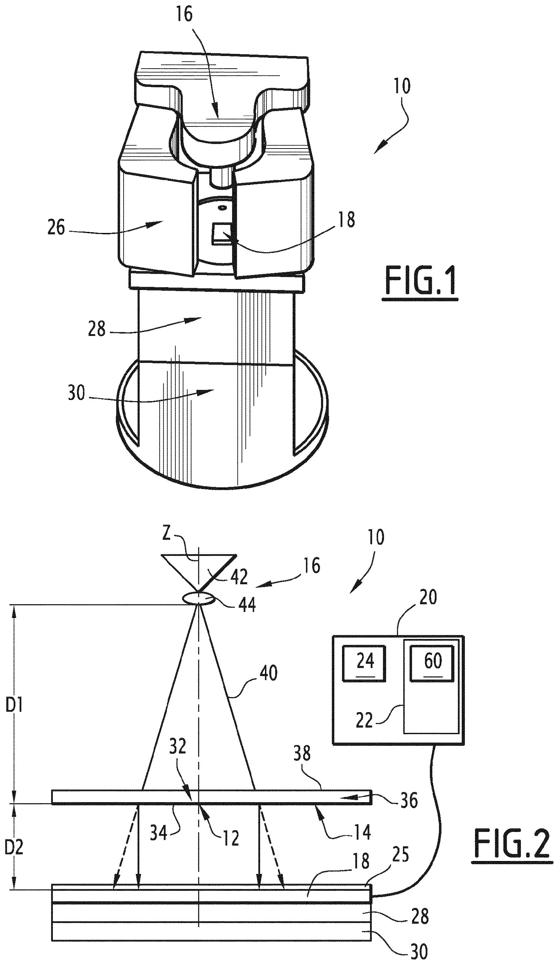

- la figure 2 est une représentation schématique du système d'estimation de la figure 1, le système d'estimation comprenant un substrat transparent adapté pour recevoir le milieu de culture, une source de lumière propre à éclairer le milieu de culture, un photodétecteur matriciel d'acquisition d'images du rayonnement transmis par le milieu éclairé et une unité de traitement d'informations, l'unité de traitement d'informations étant configurée pour calculer une estimation de la concentration de l'espèce dans le milieu de culture en fonction d'une intensité de pixels de l'image acquise, le milieu de culture changeant de couleur lors de la variation de ladite concentration,
- la figure 3 est un organigramme d'un procédé d'estimation selon l'invention,
- les figures 4 et 5 sont des vues d'images acquises à deux instants temporels distincts à l'aide du photodétecteur de la figure 2, lors de l'éclairement du milieu de culture,
- la figure 6 est une courbe obtenue lors d'une étape préliminaire de calibration et représentant le pH en fonction de l'intensité, exprimée en niveaux de gris, de l'image d'un milieu de calibration, et

- la figure 7 est un ensemble de courbes parmi lesquelles trois premières courbes représentent l'évolution temporelle d'estimations du pH pour différentes sélections de pixels, et une quatrième courbe représente l'évolution temporelle d'un front cellulaire, le front cellulaire formant une limite entre une première portion du milieu de culture avec une faible prolifération cellulaire et une seconde portion du milieu de culture avec une forte prolifération cellulaire.

Dans la suite de la description, l'expression « sensiblement égal à » définit une relation d'égalité à plus ou moins 10 %, de préférence à plus ou moins 5 %.

Sur les figures 1 et 2, un système 10 d'estimation d'une concentration d'une espèce dans un milieu de culture 12 comprend un substrat transparent 14 adapté pour recevoir le milieu de culture 12. Le système d'estimation 10 comprend également une source de lumière 16 et un photodétecteur matriciel 18 adapté pour acquérir plusieurs images $I_n$, $I_{n+1}$ successives d'un rayonnement transmis par le milieu 12 éclairé par la source de lumière 16.

La concentration estimée est, par exemple, le pH. En variante, la concentration estimée est une viabilité cellulaire, c'est-à-dire une concentration en cellules vivantes, ou encore une concentration en un dérivé réactif de l'oxygène,

Le système d'estimation 10 est de manière générale adapté pour estimer ladite concentration associée au milieu de culture 12 par imagerie sans lentille, le photodétecteur matriciel 18 ne comportant pas d'optique de grossissement.

Le système d'estimation 10 comprend également une unité de traitement d'informations 20, visible sur la figure 2, comportant une mémoire 22 et un processeur 24 associé à la mémoire 22.

En complément facultatif, le système d'estimation 10 comprend un filtre optique 25 disposé entre le substrat transparent 14 et le photodétecteur matriciel 18 selon la direction verticale Z, le filtre optique 25 étant par exemple en contact avec le photodétecteur matriciel 18. Le filtre optique 25 est adapté pour transmettre uniquement une plage prédéfinie de longueurs d'onde. La plage prédéfinie de longueurs d'onde est de préférence déterminée en fonction d'une valeur prédéfinie de la concentration.

En complément facultatif, le système d'estimation 10 comprend un dispositif 26 à portes battantes, les portes étant peintes en noir, permettant d'isoler le rayonnement transmis par le milieu éclairé 12 de l'environnement extérieur. Le dispositif à portes battantes 26 permet, lorsque les portes battantes sont fermées, au technicien d'opérer alors en lumière ambiante, sans pour autant perturber les mesures effectuées à l'intérieur du système d'estimation 10.

Le système d'estimation 10 comprend également un dissipateur thermique 28 et un ventilateur 30 pour réguler la température du photodétecteur matriciel 18, notamment pour le refroidir en cas d'échauffement trop important. Ces éléments sont optionnels.

Le milieu de culture 12 comporte des particules biologiques 32, c'est-à-dire des cellules (notamment des cellules sanguines, et par exemple des globules blancs, des globules rouges ou des plaquettes), des bactéries ou colonnes bactériennes, ou encore des agrégats de cellules. Le milieu de culture 12 est, par exemple, constitué desdites cellules. Les particules biologiques 32 forment des particules diffractantes qui présentent généralement un diamètre inférieur à 100 $\mu$m. Le diamètre des particules biologiques 32 est, par exemple, compris entre 1 $\mu$m et 100 $\mu$m. Les cellules, telles que les globules blancs et les globules rouges, présentent un diamètre de l'ordre de 10 $\mu$m.

Le milieu de culture 12 est apte à changer de couleur lors de la variation de la concentration de l'espèce considérée.

En complément facultatif, le changement de couleur du milieu de culture 12 lors de la variation de la concentration de l'espèce considérée est obtenu par introduction dans le milieu de culture 12 d'un réactif adapté. Lorsque la concentration estimée est le pH, le réactif est par exemple du rouge de Phénol. Lorsque la concentration estimée est la viabilité cellulaire, le réactif est par exemple du méthanethiosulfonate, également noté MTS, du (2,3-Bis-(2-Méthoxy-4-Nitro-5-Sulfophényl)-2H-Tétrazolium-5-Carboxanilide), également noté XTT, ou encore un sel soluble de tétrazolium. Lorsque la concentration estimée est une concentration en un dérivé réactif de l'oxygène comme par exemple le peroxyde d'hydrogène ($H_2O_2$), le réactif est par exemple du (10-acétyl-3,7-dihydroxyphénoxazine), également appelé Amplex Red®.

Le substrat transparent 14 est disposé entre la source de lumière 16 et le photodétecteur matriciel 18, et est sensiblement perpendiculaire à une direction verticale Z correspondant à la direction d'éclairement du milieu de culture 12 par la source de lumière 16, comme représenté sur la figure 2.

Le substrat transparent 14 comprend, par exemple, une lame transparente 34. Dans cet exemple, le substrat transparent 14 est déposé au fond d'une boîte de Pétri 36. La boîte de Pétri 36 a ici une fonction de confinement du milieu de culture 12, et est optionnelle. Elle est adaptée pour être déposée directement sur le photodétecteur matriciel 18. La boîte de Pétri 36 comporte en complément un couvercle 38 afin de protéger le milieu de culture 12.

La source de lumière 16 est adaptée pour émettre un faisceau lumineux 40 selon la direction verticale Z afin d'éclairer le milieu de culture 12 comportant les particules diffractantes 22.

La source de lumière 16 est disposée à une première distance D1 de la lame transparente 34 selon la direction verticale Z. La première distance D1 présente, de préférence, une valeur comprise entre 1 cm et 16 cm, par exemple égale à 5 cm.

La source de lumière 16 est de préférence spatialement cohérente et de préférence monochromatique. Le terme monochromatique désigne une largeur spectrale inférieure à 80 nm, de préférence inférieure à 40 nm à mi-hauteur.

La source de lumière 16 comporte, par exemple, une source ponctuelle telle qu'une diode électroluminescente 42, également appelée LED (de l'anglais *Light Emetting Diode*), et un diaphragme 44 disposé au contact de la LED 42, comme représenté de manière schématique sur la figure 2. Le diaphragme 44 a un diamètre compris entre 40 $\mu$m et 400 $\mu$m, de préférence sensiblement égal à 150 $\mu$m. Cela permet d'augmenter la cohérence spatiale du rayonnement lumineux. La LED 42 présente par exemple une longueur d'ondes sensiblement égale à 530 nm.

En variante, la source de lumière 16 est constituée de la diode électroluminescente 42, et ne comporte pas de diaphragme. La diode électroluminescente 42 présente alors des dimensions suffisamment réduites pour être considérée comme spatialement cohérente, le diamètre de la diode électroluminescente 42 étant alors par exemple inférieur au dixième de la première distance D1.

En variante encore, la source de lumière 16 est une source de lumière spatialement et temporellement cohérente, par exemple une diode laser ou encore une diode laser de type VCSEL (de l'anglais *Vertical Cavity Surface Emetting Laser*).

Le photodétecteur matriciel 18 est adapté pour acquérir des images successives du rayonnement transmis par le milieu de culture 12, contenant les particules biologiques diffractantes 22 et éclairé par le faisceau lumineux 40. Par rayonnement transmis, on entend le rayonnement traversant le milieu de culture 12 de telle sorte que le photodétecteur matriciel 18 et la source de lumière 16 sont situés de part et d'autre du milieu de culture 12 comportant les particules diffractantes 22.

Le photodétecteur matriciel 18 est un capteur d'images en deux dimensions, à savoir dans un plan sensiblement perpendiculaire à l'axe vertical Z. Le photodétecteur matriciel 18 est un capteur d'image pixélisé, par exemple un capteur CMOS (de l'anglais *Complementary Metal Oxyde Semiconductor*). En variante, le photodétecteur matriciel 18 est un capteur CCD (de l'anglais *Charge Coupled Device*).

Le photodétecteur matriciel 18 comporte une pluralité de pixels, non représentés, chacun présentant des dimensions inférieures ou égales à 10 $\mu$m. Dans l'exemple de réalisation des figures 1 et 2, chaque pixel est en forme d'un carré de côté sensiblement égal à 2,2 $\mu$m.

Le photodétecteur matriciel 18 peut comporter en complément des microlentilles, non représentées, chaque microlentille étant disposée au-dessus d'un pixel correspondant. De telles microlentilles sont intégrées au capteur et permettent d'améliorer le rendement de collecte, sans pour autant former une optique de grossissement disposée entre le substrat transparent 14 et le photodétecteur 18.

Les images acquises par le photodétecteur matriciel 18 sont formées par le rayonnement transmis directement par le milieu éclairé 12, en l'absence d'optique de grossissement disposée entre le substrat transparent 14 et le photodétecteur matriciel 18. Le photodétecteur 18 est également appelé dispositif d'imagerie sans lentille, et est apte à former une image du milieu 12, tout en étant placé à une faible distance de ce dernier. Par faible distance, on entend une distance inférieure à quelques centimètres, de préférence inférieure à 1 cm. Le photodétecteur 18 est disposé à une deuxième distance D2 de la lame transparente 34 selon la direction verticale Z, et la deuxième distance D2 est alors généralement inférieure à 5 cm, de préférence sensiblement égale à 1 cm.

Le fait de privilégier une faible valeur pour la deuxième distance D2, c'est-à-dire une faible distance entre le photodétecteur matriciel 18 et le substrat transparent 14, permet de limiter les phénomènes d'interférence entre différentes figures de diffraction lorsque le milieu de culture 12 est éclairé.

Le photodétecteur matriciel 18 est alors propre à réaliser une image d'au moins une figure élémentaire de diffraction 50 transmise par le milieu de culture 12, chaque figure élémentaire de diffraction 50 correspondant à des ondes diffractées par une particule diffractante 22, lors de l'éclairement du milieu de culture 12. Ainsi, le photodétecteur matriciel 18 permet d'obtenir une image $I_n$, dite image observée, comportant une ou plusieurs figures élémentaires de diffraction 50, où n est un indice compris entre 1 et N et correspondant au numéro de l'image dans la séquence d'images successives acquises, avec n et N nombres entiers supérieurs ou égaux à 1. La cadence d'acquisition est généralement comprise entre 40 images par secondes et une image toutes les 10 à 20 secondes.

Les images acquises $I_n$, $I_{n+1}$ correspondent aux interférences de figures de diffraction engendrées par les particules 32 en suspension dans le milieu de culture 12. L'éclairement des particules 32 par le faisceau 40 spatialement et temporellement cohérent, tel qu'un faisceau laser, engendre une figure de diffraction, qui varie lors du mouvement des particules 32 contenues dans le milieu 12.

L'observation d'une figure de diffraction exploitable, en plaçant le photodétecteur matriciel 18 à une distance aussi faible est notamment due à l'absence d'optique de grossissement entre le substrat transparent 14 et le photodétecteur 18.

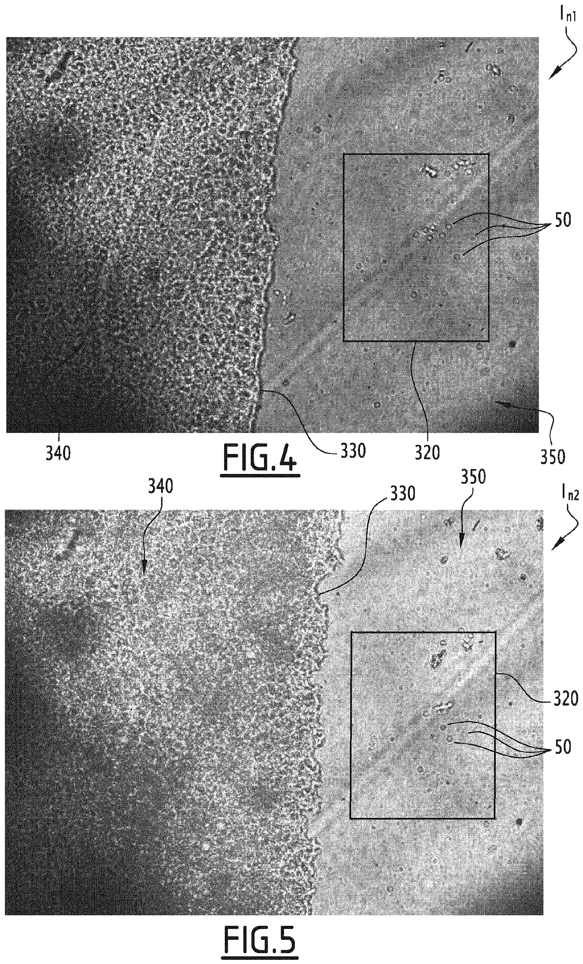

Les figures 4 et 5 représentent deux images acquises, comportant chacune une pluralité de figures élémentaires de diffraction 50, chaque figure 50 étant constituée d'une zone centrale, dont l'intensité est sensiblement homogène, cette zone centrale étant entourée d'anneaux concentriques, dont l'intensité est alternativement faible (anneaux sombres) et élevée (anneaux clairs).

Chaque image $I_n$ acquise par le photodétecteur matriciel 18 comporte une pluralité de pixels $I_n(x,y)$, chacun étant repéré par une abscisse x et une ordonnée y dans l'image et le photodétecteur matriciel 18 est adapté pour mesurer l'intensité I(x,y) de chaque pixel. Chaque image acquise $I_n$ est, par exemple, monochromatique.

La mémoire 22 est apte à stocker un logiciel 60 d'estimation de la concentration de l'espèce dans le milieu de culture 12.

Le processeur 24 est adapté pour exécuter le logiciel d'estimation 60.

Le logiciel d'estimation 60 forme des moyens d'estimation de la concentration de l'espèce dans le milieu de culture 12.

En variante, les moyens d'estimation 60 sont réalisés sous forme d'un composant logique programmable, ou encore sous forme d'un circuit intégré dédié.

Le logiciel d'estimation 60 est configuré pour calculer une estimation de la concentration de l'espèce dans le milieu de culture en fonction de l'intensité de pixels de l'image acquise.

Le logiciel d'estimation 60 est, par exemple, configuré pour calculer une valeur estimée de ladite concentration. Le calcul de la valeur estimée est par exemple effectué à l'aide d'une relation de calibration déterminée préalablement, la relation de calibration définissant une relation mathématique entre l'intensité et la concentration. Autrement dit, à chaque valeur de l'intensité est associée une valeur de la concentration via cette relation mathématique de calibration, ceci pour une plage prédéfinie de valeurs de la concentration ou de l'intensité. Le logiciel d'estimation 60 est alors adapté pour déterminer la valeur de l'intensité pour les pixels considérés de l'image acquise, puis pour calculer la valeur correspondante de la concentration via la relation prédéterminée de calibration.

En complément ou en variante, le logiciel d'estimation 60 est configuré pour calculer une variation estimée de ladite concentration, ladite variation estimée étant calculée par comparaison de l'intensité de pixels de l'image acquise avec celle d'une image de référence, l'image de référence étant choisie parmi une image prédéterminée et une image du milieu de culture acquise précédemment. Le logiciel d'estimation 60 est alors adapté pour déterminer la valeur de l'intensité pour les pixels considérés de l'image acquise et celle pour les pixels considérés de l'image de référence, puis pour calculer une différence entre ces deux valeurs d'intensité, et enfin pour estimer la variation de la concentration en fonction de la différence d'intensité calculée.

L'intensité prise en compte pour calculer cette estimation est, par exemple, une valeur moyenne ou une valeur médiane de l'intensité des pixels considérés. Par valeur moyenne, on entend une valeur calculée sous forme d'une moyenne arithmétique, d'une moyenne géométrique, d'une moyenne harmonique, d'une moyenne quadratique ou encore d'une moyenne pondérée. De manière générale, l'intensité prise en compte pour calculer cette estimation est obtenue en combinant l'intensité de chaque pixel considéré de l'image acquise. Par pixel considéré, on entend un pixel de l'image acquise dont l'intensité est prise en compte pour le calcul de l'estimation de la concentration de l'espèce dans le milieu de culture, tous les pixels de l'image acquise n'étant pas nécessairement pris en compte pour ce calcul, comme cela va être décrit ci-après.

L'intensité est par exemple exprimée en niveau de gris lorsque l'image acquise est monochromatique.

En complément facultatif, le logiciel d'estimation 60 est configuré pour identifier au moins une figure élémentaire de diffraction 50 dans l'image acquise, puis pour sélectionner des pixels situés en dehors de chaque figure élémentaire de diffraction 50 identifiée, et enfin pour calculer l'estimation de la concentration de l'espèce dans le milieu de culture 12 en fonction de l'intensité des pixels ainsi sélectionnés.

Le fait de calculer l'estimation de la concentration à partir de l'intensité de pixels situés en dehors de chaque figure élémentaire de diffraction 50 permet d'obtenir une meilleure estimation de la concentration. En effet, lors de la calibration, au cours de laquelle est prédéfinie la relation mathématique entre l'intensité et la concentration, le milieu de culture servant à effectuer cette calibration est généralement dépourvu de particules biologiques.

Afin d'identifier au moins une figure élémentaire de diffraction 50, le logiciel d'estimation 60 est adapté pour localiser, dans l'image acquise $I_n$, un point particulier, tel que le centre, de chaque figure élémentaire de diffraction 50. La localisation de chaque point particulier, tel que le centre, est par exemple effectuée en appliquant une fonction d'autocorrélation, de préférence normée, de manière à obtenir, à partir de l'image acquise $I_n$ et d'une figure de diffraction élémentaire de référence $I_R$, une image de corrélation $I_C$, vérifiant l'équation suivante :

$$I_C(x,y) = \frac{\sum_{i,j} I_R(i,j) \times I_n(x+i, y+j)}{\sqrt{\sum_{i,j} I_R(i,j)^2 \times \sum_{i,j} I_n(x+i, y+j)^2}} \qquad (1)$$

Sur l'image de corrélation $I_C$, chaque pic d'intensité correspondant alors à la position du centre de la figure de diffraction correspondant à l'image de référence $I_R$.

La figure de diffraction élémentaire de référence $I_R$ est préalablement établie, sur la base d'une modélisation ou sur la base d'images expérimentales.

En variante, pour détecter le centre de la figure de diffraction, le logiciel d'estimation 60 est adapté pour reconstruire une image des particules diffractantes 32 à partir de l'image acquise I$_n$, et suivant un algorithme de reconstruction holographique connu. Un tel algorithme permet à partir d'une figure élémentaire de diffraction, de reconstruire la géométrie et/ou la position de l'objet diffractant. Le logiciel d'estimation 60 est ensuite propre à détecter dans l'image reconstruite la position correspondante au centre de chaque figure de diffraction, puis à déterminer une région de l'image acquise I$_n$, cette région comportant la figure élémentaire de diffraction 50 correspondante.

En variante, l'identification d'au moins une figure élémentaire de diffraction 50 est effectuée manuellement, l'opérateur réalisant une sélection manuelle de la zone de l'image qui est considérée comme représentative de la figure élémentaire de diffraction correspondante 50.

En complément facultatif, le logiciel d'estimation 60 est configuré pour calculer une estimation de la concentration en fonction de l'intensité des pixels d'une zone d'intérêt préalablement sélectionnée, la zone d'intérêt sélectionnée comportant de préférence au moins une figure élémentaire de diffraction 50. De préférence encore, la zone d'intérêt sélectionnée comporte une pluralité de figures élémentaires de diffraction 50. La sélection de la zone d'intérêt est effectuée manuellement par l'opérateur, ou bien directement par le logiciel d'estimation 60.

Lorsque les deux compléments facultatifs décrits précédemment sont mis en œuvre, le logiciel d'estimation 60 est alors configuré pour identifier la ou chaque figure élémentaire de diffraction 50 à l'intérieur de la zone d'intérêt sélectionnée, puis pour sélectionner, parmi les pixels de la zone d'intérêt sélectionnée, des pixels situés en dehors de chaque figure élémentaire de diffraction identifiée, et enfin pour calculer l'estimation de la concentration de l'espèce dans le milieu de culture 12 en fonction de l'intensité des pixels ainsi sélectionnés à l'intérieur de la zone d'intérêt.

En complément facultatif encore, le logiciel d'estimation 60 est configuré pour identifier une ou plusieurs figures élémentaires de diffraction 50 dans l'image acquise, puis pour déterminer une caractéristique relative à chaque particule biologique 32 correspondant à une figure élémentaire identifiée respective.

Par caractéristique relative aux particules biologiques 32, on entend le dénombrement des particules biologiques 32, c'est-à-dire le dénombrement des figures élémentaires de diffraction 50 identifiées. Ceci permet de contrôler, à l'aide de la même image acquise, à la fois la concentration de l'espèce dans le milieu et la prolifération cellulaire, lorsque les particules biologiques 32 sont des cellules. Pour effectuer le dénombrement des figures élémentaires de diffraction 50, le logiciel d'estimation 60 est, comme décrit précédemment, adapté pour localiser, dans l'image acquise I$_n$, un point particulier, tel que le centre, de chaque figure élémentaire de diffraction 50, puis pour dénombrer le nombre desdits points particuliers dans l'image acquise I$_n$.

Par caractéristique relative aux particules biologiques 32, on entend également l'identification de la particule biologique 32 en fonction de la forme de la figure élémentaire de diffraction 50, les particules biologiques 32 étant des cellules (globules rouges, globules blancs ou plaquettes) ou des agrégats de cellules, ou encore des bactéries ou colonies bactériennes. Pour effectuer l'identification de la particule biologique 32 correspondant à une figure élémentaire de diffraction 50 donnée, le logiciel d'estimation 60 est, par exemple adapté pour mettre en oeuvre un algorithme de reconstruction des propriétés optiques de la particule biologique 32, conforme à celui décrit dans le document WO 2014/009519 A1 publié le 16 janvier 2014, notamment en page 8, ligne 31 à page 18, ligne 24. Par propriétés optiques de la particule biologique 32, on entend notamment l'absorption de l'objet ou le retard de phase introduit par la particule biologique 32, sachant que ces paramètres représentent respectivement le module et l'argument de la fonction d'opacité complexe de la particule biologique 32. L'algorithme de reconstruction permet notamment de déterminer la distribution spatiale de ces paramètres. Lorsque les particules biologiques 32 sont des cellules, le logiciel d'estimation 60 est alors également adapté pour déterminer des dimensions du noyau et/ou du cytoplasme de la cellule, via la mise en oeuvre de cet algorithme de reconstruction.

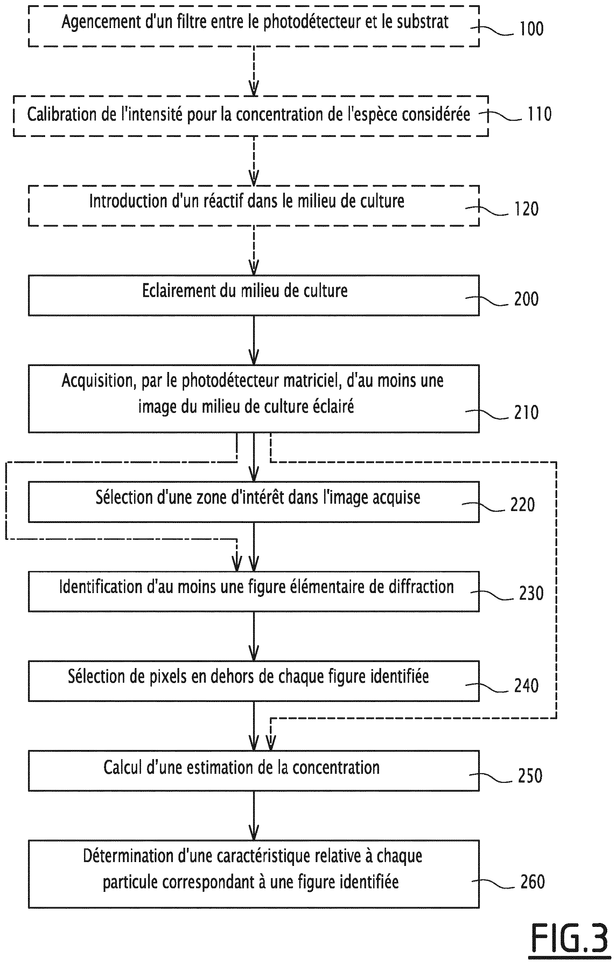

Le fonctionnement du système d'estimation 10 selon l'invention va être à présent décrit à l'aide de la figure 3 représentant un organigramme du procédé d'estimation selon l'invention.

Les étapes 100 à 120 sont des étapes préliminaires optionnelles qui, lorsqu'elles sont mises en œuvre, sont préférentiellement effectuées avant de placer le milieu de culture 12 sur le substrat transparent 14.

L'étape 100 consiste à agencer le filtre optique 25 entre le photodétecteur matriciel 18 et le substrat transparent 14 selon la direction verticale Z. Le filtre optique 25, disposé entre le substrat transparent 14 et le photodétecteur 18, transmet alors seulement certaines longueurs d'onde qui sont prédéfinies en fonction de la concentration estimée.

L'étape 110 est une étape de calibration de l'intensité pour la concentration considérée, au cours de laquelle est prédéfinie la relation mathématique entre l'intensité et la concentration, cette relation associant une valeur de la concentration à chaque valeur de l'intensité, et pour une plage prédéfinie de valeurs de la concentration ou de l'intensité.

Lors de l'étape de calibration 110, la valeur de la concentration de l'espèce dans le milieu de calibration est modifiée selon différentes valeurs successives, et la relation entre l'intensité et la concentration est déterminée pour ces différentes valeurs successives. Le milieu de calibration est de préférence dépourvu de particules biologiques, afin que la relation ainsi déterminée entre l'intensité et la concentration ne dépende pas de la nature, i.e. du type, des particules biologiques.

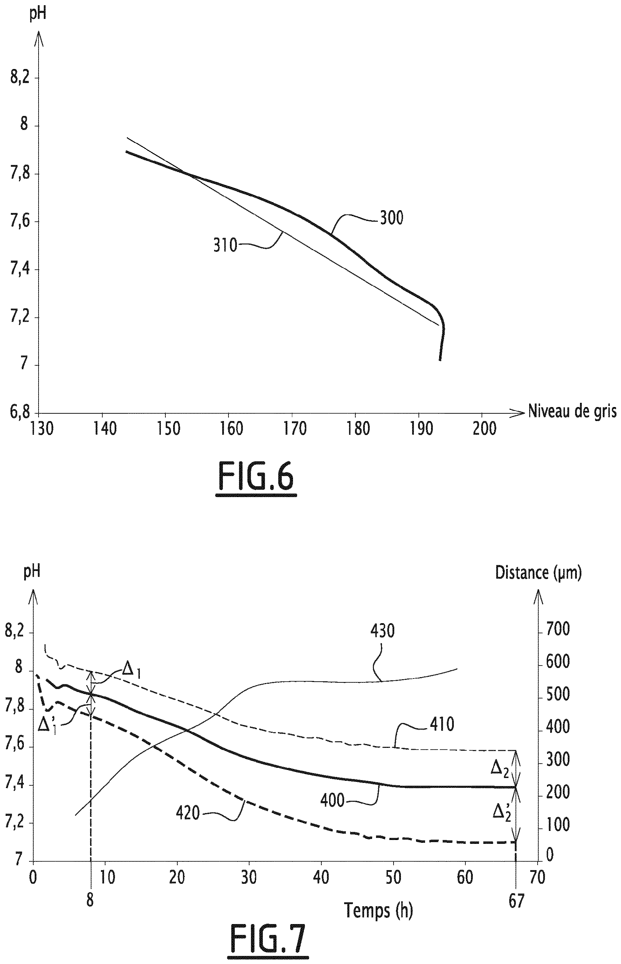

Dans l'exemple de réalisation de la figure 6, la concentration considérée est le pH (concentration en ions $H_3O^+$),

et une première courbe 300 correspond à des valeurs d'intensité exprimées en niveaux de gris, qui sont mesurées pour des images acquises successivement au fur et à mesure que le pH du milieu de calibration varie. La variation du pH du milieu de calibration est, par exemple, obtenue en ajoutant du vinaigre dans le milieu de calibration, la valeur du pH étant alors mesurée par impédancemétrie. À titre d'exemple, l'ajout progressif de 20 μL de vinaigre dans 3 mL de milieu de calibration permet de faire varier le pH depuis une valeur initiale sensiblement égale à 7,9 jusqu'à une valeur finale sensiblement égale à 7. À partir de ces valeurs mesurés du pH du milieu de calibration, associées à des valeurs mesurées d'intensité, une relation mathématique entre l'intensité et le pH, dite relation de calibration, est déterminée. Dans l'exemple de la figure 6, cette relation de calibration est obtenue par interpolation à partir de la première courbe 300, et est représentée sous forme d'une deuxième courbe 310. Cette relation est par exemple une relation linéaire, suite à une interpolation d'ordre 1, comme représenté sur la figure 6. L'homme du métier comprendra bien entendu que la relation de calibration n'est pas nécessairement une relation linéaire, l'interpolation permettant d'obtenir cette relation de calibration étant en variante d'ordre supérieur ou égal à 2.

Lorsque la concentration estimée est une concentration en DRO, la relation de calibration est par exemple obtenue pour le peroxyde d'hydrogène $H_2O_2$ en mesurant l'absorption du milieu de culture et du réactif sans cellules lors de l'ajout d'une quantité prédéfinie de $H_2O_2$ suivant une gamme.

Lors de l'étape préliminaire suivante 120, le réactif est, de manière optionnelle, introduit dans le milieu de culture 12 pour obtenir, le cas échéant, le changement de couleur lors de la variation de la concentration. Le réactif est par exemple du rouge de Phénol pour obtenir un changement de couleur lorsque le pH varie. À titre d'exemple illustratif, la couleur obtenue est alors jaune pour un pH inférieur à 6,6 ; rouge pour un pH supérieur à 8,4 ; et orange (en variant entre le jaune et le rouge) dans la zone de virage pour un pH de valeur comprise entre 6,6 et 8,4.

Lorsque la concentration estimée est la viabilité cellulaire (concentration en cellules vivantes), le réactif est par exemple le MTS, et une variation d'absorbance sera, par exemple, observée à sensiblement 490nm.

Lorsque la concentration estimée est une concentration en DRO, tel que le peroxyde d'hydrogène $H_2O_2$, le réactif est par exemple du (10-acétyl-3,7-dihydroxyphénoxazine), également appelé Amplex Red®, et une variation d'absorbance sera, par exemple, observée à sensiblement 560nm

À l'issue des étapes 100 à 120 préliminaires et optionnelles, le milieu de culture 12 est, lors de l'étape 200, placé sur le substrat transparent 14, puis éclairé par la source de lumière 16. Le milieu de culture 12 présente, par exemple, un volume sensiblement égal à 3 mL. Le milieu de culture 12 est, par exemple, un milieu minimum essentiel de Dulbecco, également noté DMEM (de l'anglais *Dulbecco's Modified Eagle Medium*).

Lors de l'étape suivante 210, le photodétecteur matriciel 18 effectue l'acquisition de l'image $I_n$ de transmission à l'instant $t_n$. En complément facultatif, lorsque l'estimation de la concentration consiste à estimer une variation de ladite concentration, le photodétecteur matriciel 18 effectue, lors de cette étape, l'acquisition séquentielle de plusieurs images de transmission $I_n$, $I_{n+1}$ à des instants successifs $t_n$, $t_{n+1}$.

Chaque image de transmission $I_n$, $I_{n+1}$ est formée par le rayonnement transmis, à l'instant d'acquisition $t_n$, $t_{n+1}$, correspondant, par le milieu de culture 12 éclairé. Autrement dit, le photodétecteur matriciel 18 réalise des images des figures élémentaires de diffraction 50 transmises par les particules se trouvant dans le milieu de culture éclairé 12, chaque figure de diffraction élémentaire correspondant à des ondes diffractées par les particules biologiques diffractantes 32 lors de l'éclairement du milieu 12, ces ondes diffractées interférant avec l'onde lumineuse incidente.

L'observation d'une figure de diffraction exploitable, en plaçant le photodétecteur matriciel 18 à une distance relativement faible est notamment due à l'absence d'optique de grossissement entre le milieu de culture 12 et le photodétecteur matriciel 18.

Lors de l'étape d'acquisition 210, le photodétecteur 18 est de préférence disposé à une faible distance du milieu 12, la deuxième distance D2 entre le milieu 12 et le photodétecteur 18 selon la direction verticale Z étant généralement inférieure à 5 cm, de préférence inférieure à 1 cm, et par exemple de l'ordre de quelques millimètres.

A l'issue de l'étape d'acquisition 210, le logiciel d'estimation 60 effectue, lors de l'étape optionnelle 220, la sélection d'une zone d'intérêt 320 dans la ou les images acquises $I_n$, $I_{n+1}$, la zone d'intérêt sélectionnée 320 comportant de préférence au moins une figure élémentaire de diffraction 50, de préférence encore une pluralité de figures élémentaires de diffraction 50. En variante, la sélection de la zone d'intérêt 320 est effectuée manuellement par l'opérateur.

La zone d'intérêt sélectionnée 320 est généralement en forme d'un rectangle, chaque côté du rectangle présentant des dimensions de l'ordre de quelques dizaines ou quelques centaines de pixels, comme représenté sur les figures 4 et 5.

Par ailleurs, sur les figures 4 et 5, la ligne 330 correspond à une frontière entre une première zone 340 du milieu de culture présentant une forte prolifération cellulaire et une deuxième zone 350 du milieu de culture présentant une faible prolifération cellulaire.

À l'issue de l'étape d'acquisition 210 (cheminement en trait mixte sur la figure 3), ou le cas échéant à l'issue de l'étape optionnelle de sélection 220 (cheminement en trait continu sur la figure 3), le logiciel d'estimation 60 identifie, lors de l'étape optionnelle 230, une ou plusieurs figures élémentaires de diffraction 50, le cas échéant à l'intérieur de la zone d'intérêt sélectionnée. Par exemple, le logiciel d'estimation 60 localise dans l'image acquise $I_n$, ou le cas échéant dans la zone d'intérêt sélectionnée, un point particulier, tel que le centre, de chaque figure élémentaire de diffraction 50.

À l'issue de cette étape optionnelle d'identification 230, le logiciel d'estimation 60 sélectionne, lors de l'étape optionnelle 240, des pixels de l'image acquise $I_n$, ou le cas échéant de la zone d'intérêt sélectionnée, qui sont situés en dehors de chaque figure élémentaire de diffraction identifiée.

L'étape suivante 250 de calcul de l'estimation de la concentration de l'espèce dans le milieu de culture 12 est effectuée directement à l'issue de l'étape d'acquisition 210, comme représenté par le cheminement en trait pointillé sur la figure 3, ou bien à l'issue de l'étape optionnelle de sélection de pixels 240, comme représenté par le cheminement en trait continu sur la figure 3.

L'homme du métier comprendra alors que les étapes 220, 230 et 240 sont facultatives pour le calcul de l'estimation de la concentration, ces étapes visant à obtenir une estimation plus précise de la concentration en sélectionnant seulement une zone d'intérêt dans l'image acquise $I_n$ et/ou en sélectionnant des pixels en dehors de chaque figure élémentaire de diffraction identifiée, pour estimer ensuite la concentration de l'espèce dans le milieu de culture 12 en fonction de l'intensité des pixels à l'intérieur de ladite zone et/ou sélectionnés en dehors de chaque figure élémentaire de diffraction identifiée.

Lors de l'étape 250, le logiciel d'estimation 60 commence par calculer une valeur de référence de l'intensité à partir :

- i) des valeurs d'intensité de pixels de l'ensemble de l'image acquise $I_n$ lorsque les étapes 220, 230 et 240 ne sont pas effectuées ; ou
- ii) des valeurs d'intensité de pixels de la zone d'intérêt sélectionnée lorsque seule l'étape 220 est effectuée parmi les étapes optionnelles 220 à 240 ; ou
- iii) des valeurs d'intensité de pixels sélectionnés dans l'image acquise $I_n$ en dehors de chaque figure élémentaire de diffraction identifié, lorsque seules les étapes 230 et 240 sont effectuées parmi les étapes optionnelles 220 à 240 ; ou encore
- iv) des valeurs d'intensité de pixels sélectionnés dans la zone d'intérêt sélectionnée et en dehors de chaque figure élémentaire de diffraction identifiée, lorsque toutes les étapes optionnelles 220, 230 et 240 sont effectuées.

La valeur de référence est, par exemple, une valeur moyenne (arithmétique, géométrique, harmonique, quadratique ou encore pondérée) ou une valeur médiane desdites valeurs d'intensité de pixels considérées. De manière générale, cette valeur de référence est obtenue en combinant lesdites valeurs d'intensité de pixels considérées.

Lorsque le logiciel d'estimation 60 est configuré pour calculer une valeur estimée de ladite concentration, cette valeur estimée est alors calculée en déterminant, via la relation de calibration, la valeur de la concentration correspondant à la valeur de référence de l'intensité préalablement calculée.

Lorsque le logiciel d'estimation 60 est configuré pour calculer une variation estimée de ladite concentration, cette variation estimée est calculée à partir de l'évolution entre les valeurs de référence de l'intensité calculées pour au moins deux images acquises $I_n$, $I_{n+1}$ successives, et selon la concentration considérée.

Dans l'exemple de réalisation de la figure 6, le pH diminue lorsque que l'intensité, exprimée en niveaux de gris, augmente. Ainsi, selon cet exemple de la figure 6, si la valeur de référence de l'intensité augmente d'une image acquise $I_n$ à la suivante $I_{n+1}$, alors le logiciel d'estimation 60 en déduit une diminution du pH du milieu de culture 12 ; inversement, si la valeur de référence diminue d'une image acquise $I_n$ à la suivante $I_{n+1}$, alors le logiciel d'estimation 60 en déduit une augmentation du pH ; et si la valeur de référence est sensiblement égale d'une image acquise $I_n$ à la suivante $I_{n+1}$, alors le logiciel d'estimation 60 en déduit une stabilisation du pH.

Dans l'exemple de réalisation de la figure 7, le logiciel d'estimation 60 a alors permis d'obtenir des première, deuxième et troisième courbes de pH 400, 410 et 420. La première courbe de pH 400 (en trait gras continu) correspondant à l'estimation du pH à partir des valeurs d'intensité de pixels de l'ensemble de chaque image acquise $I_n$, c'est-à-dire lorsque la valeur de référence d'intensité pour chaque image acquise $I_n$ est calculée suivant le cas i). La deuxième courbe de pH 410 (en trait fin pointillé) correspond à l'estimation du pH à partir des valeurs d'intensité de pixels à l'intérieur de la zone d'intérêt sélectionnée pour chaque image acquise $I_n$, sans toutefois sélectionner les pixels en dehors des figures élémentaires de diffraction 50, c'est-à-dire lorsque la valeur de référence d'intensité pour chaque image acquise $I_n$ est calculée suivant le cas ii). Enfin, la troisième courbe de pH 420 (en trait gras pointillé) correspond à l'estimation du pH à partir des valeurs d'intensité de pixels à l'intérieur de la zone d'intérêt sélectionnée et en dehors des figures élémentaires de diffraction identifiées, c'est-à-dire lorsque la valeur de référence d'intensité pour chaque image acquise $I_n$ est calculée suivant le cas iv).

Sur la figure 7, on observe alors que le pH avec la deuxième courbe 410 est supérieur à celui avec la première courbe 400, qui est lui-même supérieur à celui avec la troisième courbe 420. Ceci est dû au fait que, pour l'exemple de réalisation de la figure 7, la relation de calibration a été déterminée à partir d'un milieu de calibration dépourvu de particules biologiques, et la troisième courbe 420 qui a été obtenue à partir de pixels sélectionnés en dehors des figures élémentaires de diffraction est alors la courbe pour laquelle la valeur estimée du pH est la plus fiable. L'écart avec la troisième courbe 420 est logiquement plus important pour la deuxième courbe 410, obtenue à partir de la zone d'intérêt sélectionnée autour de figures élémentaires de diffraction, tout en conservant ces figures de diffraction, que pour la première courbe 400 qui a été obtenue à partir de pixels de l'ensemble de chaque image acquise $I_n$.

Ceci étant, l'homme du métier observera qu'un premier écart relatif de pH $\Delta$ entre la première courbe 400 et la deuxième courbe 410 varie peu au cours de l'évolution du pH, et de manière analogue qu'un deuxième écart relatif de pH $\Delta'$ entre la première courbe 400 et la troisième courbe 420 varie également peu au cours de l'évolution du pH. En effet, une première valeur $\Delta_1$ du premier écart relatif est sensiblement égale à 0,12 à l'instant TO + 8h, et une première valeur $\Delta'_1$ du deuxième écart relatif est aussi sensiblement égale à 0,12 à cet instant T0 + 8h correspondant à l'instant d'acquisition de l'image $I_{n1}$ visible sur la figure 4, où TO représente l'instant initial de l'essai correspondant aux figures 4, 5 et 7. Une deuxième valeur $\Delta_2$ du premier écart relatif est sensiblement égale à 0,20 à l'instant T0 + 67h, et une deuxième valeur $\Delta'_2$ du deuxième écart relatif est sensiblement égale à 0,28 à cet instant TO + 67h correspondant à l'instant d'acquisition de l'image $I_{n2}$ visible sur la figure 5. La variation des premier et deuxième écarts relatifs $\Delta$, $\Delta'$ en fonction de l'évolution du pH est alors acceptable sachant qu'en se basant sur la troisième courbe 420, la valeur estimée du pH est sensiblement égale à 7,8 à l'instant TO + 8h, puis sensiblement égale à 7,1 à l'instant TO + 67h.

Autrement dit, même si il est préférable de calculer la valeur estimée du pH du milieu de culture 12 à partir de la troisième courbe 420 avec la valeur de référence intensité calculée suivant le cas iv) suite à la mise en œuvre des étapes optionnelles 220 à 240, l'homme du métier comprendra que le logiciel d'estimation 60 est néanmoins apte à calculer une valeur estimée satisfaisante du pH à partir de la première courbe 400 avec la valeur de référence d'intensité calculée suivant le cas i), c'est-à-dire en passant directement de l'étape 210 à l'étape 250.

En outre, afin d'obtenir une valeur estimée du pH plus fiable, le logiciel d'estimation 60 est en complément apte à soustraire une valeur prédéfinie à la valeur estimée obtenue à partir de la première courbe 400, afin de compenser le biais dans la valeur du pH introduit par la présence des figures élémentaires de diffraction 50 correspondant aux particules biologiques 32, alors que la relation de calibration a été déterminée à partir d'un milieu de calibration dépourvu de ces particules biologiques.

A l'issue de l'étape de calcul d'estimation 250, le logiciel d'estimation 60 détermine, lors de l'étape optionnelle 260, une caractéristique relative à chaque particule correspondant à une figure élémentaire de diffraction identifiée lors de l'étape 230. Ceci permet alors de suivre à la fois l'évolution de la concentration de l'espèce dans le milieu de culture 12 et l'évolution de la caractéristique relative aux particules biologiques 32 contenues dans le milieu de culture. À titre d'exemple, lorsque la détermination de la caractéristique de ces particules biologiques 32 consiste en le dénombrement de ces particules biologiques 32 dans le milieu de culture, il est alors possible de contrôler à la fois la prolifération cellulaire et l'évolution de la concentration dans le milieu de culture 12.

Dans l'exemple de réalisation de la figure 7, la courbe 430 (en trait fin continu) représente alors l'évolution temporelle de la distance entre la frontière 330 et un point de référence, non représenté. La frontière entre la première zone 340 avec la forte prolifération cellulaire et la deuxième zone 350 avec la faible prolifération cellulaire représente un front de prolifération cellulaire, et la courbe 430 représente alors le déplacement du front de prolifération cellulaire au cours du temps. La combinaison de la courbe 430 avec l'une quelconque des première, deuxième et troisième courbes 400, 410, 420 permet alors de corréler l'activité cellulaire avec l'évolution du pH du milieu de culture 12.

On conçoit ainsi que le procédé et le système d'estimation 10 selon l'invention permettent de calculer une estimation de la concentration de l'espèce dans le milieu de culture 12 en fonction de l'intensité de pixels de l'image acquise, le milieu de culture 12 changeant de couleur lors de la variation de ladite concentration.

Lorsque la concentration estimée est le pH du milieu de culture 12, la surveillance du pH permet alors de suivre les conditions de croissance des particules biologiques 32 contenues dans le milieu de culture. En effet, le pH du milieu de culture 12 évolue lorsque le milieu 12 s'appauvrit en nutriments, et il est intéressant de pouvoir surveiller le taux de nutriments dans le milieu de culture 12 sachant que l'appauvrissement en nutriments freine la prolifération cellulaire.

## Revendications

1. Procédé d'estimation d'une concentration d'une espèce dans un milieu de culture (12) à l'aide d'un système d'estimation (10) comportant une source de lumière (16), un substrat transparent (14) et un photodétecteur matriciel (18), le substrat transparent (14) étant disposé entre la source de lumière (16) et le photodétecteur matriciel (18), le milieu de culture (12) comportant des particules biologiques (32) et étant apte à changer de couleur lors de la variation de la concentration de l'espèce,
le procédé comprenant les étapes suivantes :

- le placement (200) du milieu de culture (12) sur le substrat transparent (14),
- l'éclairement (200) du milieu de culture (12) à l'aide de la source de lumière (16),
- l'acquisition (210) d'une image ($I_n$) du milieu de culture à l'aide du photodétecteur matriciel (18), chaque image

($I_n$) étant formée par un rayonnement transmis par le milieu de culture (12) éclairé et comportant au moins une figure élémentaire de diffraction (50), chaque figure élémentaire de diffraction (50) correspondant à des ondes diffractées par une particule biologique (32) lors de l'éclairement du milieu de culture (12),
- le calcul (250) d'une estimation de la concentration de l'espèce dans le milieu de culture (12) en fonction d'une intensité de pixels de l'image acquise ($I_n$), l'estimation de la concentration étant une valeur estimée de ladite concentration, la valeur estimée étant calculée à l'aide d'une relation de calibration déterminée préalablement, la relation de calibration définissant une relation mathématique entre l'intensité et la concentration.

2.  Procédé d'estimation d'une concentration d'une espèce dans un milieu de culture (12) à l'aide d'un système d'estimation (10) comportant une source de lumière (16), un substrat transparent (14) et un photodétecteur matriciel (18), le substrat transparent (14) étant disposé entre la source de lumière (16) et le photodétecteur matriciel (18), le milieu de culture (12) comportant des particules biologiques (32) et étant apte à changer de couleur lors de la variation de la concentration de l'espèce,
    le procédé comprenant les étapes suivantes :

    - le placement (200) du milieu de culture (12) sur le substrat transparent (14),
    - l'éclairement (200) du milieu de culture (12) à l'aide de la source de lumière (16),
    - l'acquisition (210) d'une image ($I_n$) du milieu de culture à l'aide du photodétecteur matriciel (18), chaque image ($I_n$) étant formée par un rayonnement transmis par le milieu de culture (12) éclairé et comportant au moins une figure élémentaire de diffraction (50), chaque figure élémentaire de diffraction (50) correspondant à des ondes diffractées par une particule biologique (32) lors de l'éclairement du milieu de culture (12),
    - le calcul (250) d'une estimation de la concentration de l'espèce dans le milieu de culture (12) en fonction d'une intensité de pixels de l'image acquise ($I_n$), l'estimation de la concentration étant une variation estimée de ladite concentration, ladite variation estimée étant calculée par comparaison de l'intensité de pixels de l'image acquise ($I_n$) avec celle d'une image de référence, l'image de référence étant choisie parmi une image prédéterminée et une image du milieu de culture acquise précédemment.

3.  Procédé selon la revendication 1 ou 2, dans lequel la source de lumière (16) éclaire directement le substrat transparent (14), et l'image ($I_n$) est formée directement par le rayonnement transmis par le substrat transparent (14) éclairé, en l'absence d'une optique de grossissement disposée entre le substrat transparent (14) et le photodétecteur matriciel (18).

4.  Procédé selon l'une quelconque des revendications précédentes, dans lequel la concentration est choisie parmi le groupe consistant en : le pH, une viabilité cellulaire et une concentration en un dérivé réactif de l'oxygène.

5.  Procédé selon l'une quelconque des revendications précédentes, dans lequel le procédé comprend en outre, préalablement à l'étape de placement (200), l'étape suivante :

    - l'introduction (120) dans le milieu de culture d'un réactif pour obtenir le changement de couleur lors de la variation de la concentration.

6.  Procédé selon l'une quelconque des revendications précédentes, dans lequel le procédé comprend en outre, suite à l'étape d'acquisition (210), les étapes suivantes :

    - l'identification (230) d'au moins une figure élémentaire de diffraction (50) dans l'image acquise ($I_n$), et
    - la sélection (240) des pixels situés en dehors de chaque figure élémentaire de diffraction identifiée (50),

    l'estimation de la concentration de l'espèce dans le milieu de culture étant alors, lors de l'étape de calcul (250), calculée en fonction de l'intensité des pixels sélectionnés.

7.  Procédé selon l'une quelconque des revendications précédentes, dans lequel le procédé comprend en outre, suite à l'étape d'acquisition (210), l'étape suivante :

    - la sélection (220) d'une zone d'intérêt (320) dans l'image acquise,

    l'estimation de la concentration de l'espèce dans le milieu de culture étant alors, lors de l'étape de calcul (250), calculée en fonction de l'intensité des pixels de la zone d'intérêt sélectionnée (320),
    la zone d'intérêt sélectionnée (320) comportant de préférence au moins une figure élémentaire de diffraction (50).

**8.** Procédé selon les revendications 6 et 7, dans lequel l'étape de sélection de la zone d'intérêt (220) est effectuée préalablement à l'étape d'identification (230),

l'identification (230) de la ou chaque figure élémentaire de diffraction étant alors effectuée dans la zone d'intérêt sélectionnée,

la sélection (240) des pixels situés en dehors de chaque figure élémentaire de diffraction identifiée étant effectuée parmi les pixels de la zone d'intérêt sélectionnée, et

l'estimation (250) de la concentration de l'espèce dans le milieu de culture étant calculée en fonction de l'intensité desdits pixels sélectionnés.

**9.** Procédé selon l'une quelconque des revendications précédentes, dans lequel le procédé comprend en outre une étape préliminaire de calibration (110), durant laquelle une relation entre l'intensité et la concentration est déterminée à l'aide d'un milieu de calibration ayant une valeur donnée de la concentration,

le milieu de calibration étant de préférence dépourvu de particules biologiques.

**10.** Procédé selon la revendication 9, dans lequel, lors de l'étape de calibration (110), la valeur de la concentration de l'espèce dans le milieu de calibration est modifiée selon différentes valeurs successives, et la relation entre l'intensité et la concentration est déterminée pour les différentes valeurs successives.

**11.** Procédé selon l'une quelconque des revendications précédentes, dans lequel le procédé comprend en outre, préalablement à l'étape d'acquisition (210), l'étape suivante :

- la disposition (100) d'un filtre (25) entre le photodétecteur matriciel (18) et le substrat transparent (14), le filtre (25) étant apte à transmettre uniquement une plage prédéfinie de longueurs d'onde,
- la plage prédéfinie de longueurs d'onde étant de préférence déterminée en fonction d'une valeur prédéfinie de la concentration.

**12.** Procédé selon l'une quelconque des revendications précédentes, dans lequel le procédé comprend en outre, suite à l'étape d'acquisition (210), les étapes suivantes :

- l'identification (230) d'au moins une figure élémentaire de diffraction dans l'image acquise, et
- la détermination (260) d'une caractéristique relative à chaque particule biologique correspondant à une figure élémentaire identifiée respective.

**13.** Procédé selon l'une quelconque des revendications précédentes, dans lequel l'intensité prise en compte lors de l'étape de calcul est une valeur moyenne ou une valeur médiane de l'intensité des pixels considérés.

**14.** Procédé selon l'une quelconque des revendications précédentes, dans lequel l'image acquise ($I_n$) est monochromatique.

**15.** Système (10) d'estimation d'une concentration d'une espèce dans un milieu de culture (12), le milieu de culture (12) comportant des particules biologiques (32) et étant apte à changer de couleur lors de la variation de la concentration de l'espèce,

le système (10) comprenant :

- un substrat transparent (14) adapté pour recevoir le milieu de culture (12),
- une source de lumière (16) adaptée pour émettre un faisceau lumineux (40) d'éclairement du milieu de culture (12),
- un photodétecteur matriciel (18) adapté pour acquérir une image ($I_n$) du milieu de culture (12), chaque image ($I_n$) étant formée par un rayonnement transmis par le milieu de culture (12) éclairé et comportant au moins une figure élémentaire de diffraction (50), chaque figure élémentaire de diffraction (50) correspondant à des ondes diffractées par une particule biologique (32) lors de l'éclairement du milieu de culture (12),

le substrat transparent (14) étant disposé entre la source de lumière (16) et le photodétecteur matriciel (18), et
- une unité de traitement d'informations (20) adaptée pour calculer une estimation de la concentration de l'espèce dans le milieu de culture (12) en fonction d'une intensité de pixels de l'image acquise ($I_n$), l'estimation de la concentration étant une valeur estimée de ladite concentration, la valeur estimée étant calculée à l'aide d'une relation de calibration déterminée préalablement, la relation de calibration définissant une relation mathématique entre l'intensité et la concentration.

16. Système (10) d'estimation d'une concentration d'une espèce dans un milieu de culture (12), le milieu de culture (12) comportant des particules biologiques (32) et étant apte à changer de couleur lors de la variation de la concentration de l'espèce,
le système (10) comprenant :

- un substrat transparent (14) adapté pour recevoir le milieu de culture (12),
- une source de lumière (16) adaptée pour émettre un faisceau lumineux (40) d'éclairement du milieu de culture (12),
- un photodétecteur matriciel (18) adapté pour acquérir une image ($I_n$) du milieu de culture (12), chaque image ($I_n$) étant formée par un rayonnement transmis par le milieu de culture (12) éclairé et comportant au moins une figure élémentaire de diffraction (50), chaque figure élémentaire de diffraction (50) correspondant à des ondes diffractées par une particule biologique (32) lors de l'éclairement du milieu de culture (12),
le substrat transparent (14) étant disposé entre la source de lumière (16) et le photodétecteur matriciel (18), et
- une unité de traitement d'informations (20) adaptée pour calculer une estimation de la concentration de l'espèce dans le milieu de culture (12) en fonction d'une intensité de pixels de l'image acquise ($I_n$), l'estimation de la concentration étant une variation estimée de ladite concentration, ladite variation estimée étant calculée par comparaison de l'intensité de pixels de l'image acquise ($I_n$) avec celle d'une image de référence, l'image de référence étant choisie parmi une image prédéterminée et une image du milieu de culture acquise précédemment.

**Patentansprüche**

1. Verfahren zum Schätzen einer Konzentration einer Spezies in einem Kulturmedium (12) unter Verwendung eines Schätzsystems (10), das eine Lichtquelle (16), ein transparentes Substrat (14) und einen Matrix-Photodetektor (18) umfasst, wobei das transparente Substrat (14) zwischen der Lichtquelle (16) und dem Matrix-Photodetektor (18) angeordnet ist, wobei das Kulturmedium (12) biologische Partikel (32) aufweist und in der Lage ist, bei einer Änderung der Konzentration der Spezies die Farbe zu ändern,
wobei das Verfahren die folgenden Schritte umfasst:

- Anordnen (200) des Kulturmediums (12) auf dem transparenten Substrat (14),
- Beleuchten (200) des Kulturmediums (12) mit der Lichtquelle (16),
- Erfassen (210) eines Bildes ($I_n$) des Kulturmediums mittels des Matrix-Photodetektors (18), wobei jedes Bild ($I_n$) durch eine Strahlung gebildet wird, die von dem beleuchteten Kulturmedium (12) durchgelassen wird, und mindestens ein elementares Beugungsmuster (50) umfasst, wobei jedes elementare Beugungsmuster (50) Wellen entspricht, die von einem biologischen Partikel (32) gebeugt werden, wenn das Kulturmedium (12) beleuchtet wird,
- Berechnen (250) einer Schätzung der Konzentration der Spezies in dem Kulturmedium (12) abhängig von einer Intensität von Pixeln des erfassten Bildes ($I_n$), wobei die Schätzung der Konzentration ein geschätzter Wert der Konzentration ist, wobei der geschätzte Wert unter Verwendung einer zuvor bestimmten Kalibrierbeziehung berechnet wird und die Kalibrierbeziehung eine mathematische Beziehung zwischen der Intensität und der Konzentration definiert.

2. Verfahren zum Schätzen einer Konzentration einer Spezies in einem Kulturmedium (12) unter Verwendung eines Schätzsytems (10), das eine Lichtquelle (16), ein transparentes Substrat (14) und einen Matrix-Photodetektor (18) umfasst, wobei das transparente Substrat (14) zwischen der Lichtquelle (16) und dem Matrix-Photodetektor (18) angeordnet ist, wobei das Kulturmedium (12) biologische Partikel (32) aufweist und in der Lage ist, bei einer Änderung der Konzentration der Spezies die Farbe zu ändern,
wobei das Verfahren die folgenden Schritte umfasst:

- Anordnen (200) des Kulturmediums (12) auf dem transparenten Substrat (14),
- Beleuchten (200) des Kulturmediums (12) mit der Lichtquelle (16),
- Erfassen (210) eines Bildes ($I_n$) des Kulturmediums mittels des Matrix-Photodetektors (18), wobei jedes Bild ($I_n$) durch eine Strahlung gebildet wird, die von dem beleuchteten Kulturmedium (12) durchgelassen wird, und mindestens ein elementares Beugungsmuster (50) umfasst, wobei jedes elementare Beugungsmuster (50) Wellen entspricht, die von einem biologischen Partikel (32) gebeugt werden, wenn das Kulturmedium (12) beleuchtet wird,
- Berechnen (250) einer Schätzung der Konzentration der Spezies in dem Kulturmedium (12) abhängig von einer Intensität von Pixeln des erfassten Bildes ($I_n$), wobei die Schätzung der Konzentration eine geschätzte Änderung der Konzentration ist, wobei die geschätzte Änderung durch Vergleichen der Intensität von Pixeln des erfassten Bildes ($I_n$) mit der eines Referenzbildes berechnet wird, wobei das Referenzbild aus einem vorbestimmten Bild und einem zuvor erfassten Bild des Kulturmediums ausgewählt wird.

3. Verfahren nach Anspruch 1 oder 2, bei dem die Lichtquelle (16) das transparente Substrat (14) direkt beleuchtet und das Bild ($I_n$) direkt durch Strahlung gebildet wird, die durch das beleuchtete transparente Substrat (14) hindurchgeht, ohne dass eine Vergrößerungsoptik zwischen dem transparenten Substrat (14) und dem Matrix-Photodetektor (18) angeordnet ist.

4. Verfahren nach einem beliebigen der vorhergehenden Ansprüche, wobei die Konzentration ausgewählt ist aus der Gruppe, bestehend aus:
dem pH-Wert, einer Zellviabilität und einer Konzentration eines reaktiven Sauerstoffderivats.

5. Verfahren nach einem beliebigen der vorhergehenden Ansprüche, bei dem das Verfahren ferner vor dem Schritt des Anordnens (200) den folgenden Schritt umfasst:

   - Einbringen (120) eines Reagenzmittels in das Kulturmedium, um die Farbänderung bei der Änderung der Konzentration zu erhalten.

6. Verfahren nach einem beliebigen der vorhergehenden Ansprüche, wobei das Verfahren außerdem im Anschluss an den Schritt (210) des Beschaffens die folgenden Schritte umfasst:

   - Identifizieren (230) mindestens eines elementaren Beugungsmusters (50) in dem erfassten Bild ($I_n$), und
   - Auswählen (240) von Pixeln, die außerhalb jedes identifizierten elementaren Beugungsmusters (50) liegen,

   wobei die Schätzung der Konzentration der Spezies im Kulturmedium dann im Berechnungsschritt (250) abhängig von der Intensität der ausgewählten Pixel berechnet wird.

7. Verfahren nach einem beliebigen der vorhergehenden Ansprüche, bei dem das Verfahren außerdem im Anschluss an den Erfassungsschritt (210) den folgenden Schritt umfasst:

   - Auswählen (220) eines Bereichs von Interesse (320) im erfassten Bild,

   wobei die Schätzung der Konzentration der Spezies im Kulturmedium dann im Berechnungsschritt (250) abhängig von der Intensität der Pixel des ausgewählten Bereichs von Interesse (320) berechnet wird,
   wobei der ausgewählte Bereich von Interesse (320) vorzugsweise mindestens ein elementares Beugungsmuster (50) enthält.

8. Verfahren nach den Ansprüchen 6 und 7, bei dem der Schritt des Auswählens des Bereichs von Interesse (220) vor dem Identifikationsschritt (230) durchgeführt wird,
   wobei das Identifizieren (230) des oder jedes elementaren Beugungsmusters dann in dem ausgewählten Bereich von Interesse durchgeführt wird,
   das Auswählen (240) von Pixeln außerhalb jedes identifizierten elementaren Beugungsmusters aus den Pixeln des ausgewählten Bereichs von Interesse getroffen wird, und
   das Schätzen (250) der Konzentration der Spezies im Kulturmedium abhängig von der Intensität der ausgewählten Pixel berechnet wird.

9. Verfahren nach einem beliebigen der vorhergehenden Ansprüche, wobei das Verfahren ferner einen vorläufigen Schritt der Kalibrierung (110) umfasst, während dessen eine Beziehung zwischen der Intensität und der Konzentration unter Verwendung eines Kalibriermediums, das einen gegebenen Wert der Konzentration aufweist, bestimmt wird,
   wobei das Kalibriermedium vorzugsweise frei von biologischen Partikeln ist.

10. Verfahren nach Anspruch 9, bei dem im Kalibrierschritt (110) der Wert der Konzentration der Spezies im Kalibriermedium auf verschiedene aufeinanderfolgende Werte geändert wird und die Beziehung zwischen der Intensität und der Konzentration für die verschiedenen aufeinanderfolgenden Werte bestimmt wird.

**11.** Verfahren nach einem beliebigen der vorhergehenden Ansprüche, bei dem das Verfahren außerdem vor dem Erfassungsschritt (210) den folgenden Schritt umfasst:

- Anordnen (100) eines Filters (25) zwischen dem Matrix-Photodetektor (18) und dem transparenten Substrat (14), wobei das Filter (25) geeignet ist, nur einen vordefinierten Bereich von Wellenlängen durchzulassen,
- wobei der vordefinierte Wellenlängenbereich vorzugsweise abhängig von einem vordefinierten Wert der Konzentration bestimmt wird.

**12.** Verfahren nach einem beliebigen der vorhergehenden Ansprüche, wobei das Verfahren außerdem folgend auf den Schritt (210) des Erfassens die folgenden Schritte umfasst:

- Identifizieren (230) mindestens eines elementaren Beugungsmusters in dem erfassten Bild, und
- Bestimmen (260) eines jedes biologische Partikel betreffenden Merkmals, das einem jeweiligen identifizierten elementaren Muster entspricht.

**13.** Verfahren nach einem beliebigen der vorhergehenden Ansprüche, bei dem die im Berechnungsschritt berücksichtigte Intensität ein Mittelwert oder ein Medianwert der Intensität der betrachteten Pixel ist.

**14.** Verfahren nach einem beliebigen der vorhergehenden Ansprüche, bei dem das erfasste Bild ($I_n$) monochromatisch ist.

**15.** System (10) zum Schätzen einer Konzentration einer Spezies in einem Kulturmedium (12), wobei das Kulturmedium (12) biologische Partikel (32) aufweist und in der Lage ist, bei einer Änderung der Konzentration der Spezies die Farbe zu ändern,
wobei das System (10) umfasst:

- ein transparentes Substrat (14), das zur Aufnahme des Kulturmediums (12) geeignet ist,
- eine Lichtquelle (16), die geeignet ist, ein Lichtbündel (40) zum Beleuchten des Kulturmediums (12) abzustrahlen,
- einen Matrix-Photodetektor (18), der geeignet ist, ein Bild ($I_n$) des Kulturmediums (12) zu erfassen, wobei jedes Bild ($I_n$) durch eine Strahlung gebildet wird, die von dem beleuchteten Kulturmedium (12) durchgelassen wird, und mindestens ein elementares Beugungsmuster (50) umfasst, wobei jedes elementare Beugungsmuster (50) Wellen entspricht, die von einem biologischen Partikel (32) bei der Beleuchtung des Kulturmediums (12) gebeugt werden,
wobei das transparente Substrat (14) zwischen der Lichtquelle (16) und dem Matrix-Photodetektor (18) angeordnet ist, und
- eine Informationsverarbeitungseinheit (20), die angepasst ist, eine Schätzung der Konzentration der Spezies in dem Kulturmedium (12) abhängig von einer Intensität von Pixeln des erfassten Bildes ($I_n$) zu berechnen, wobei die Schätzung der Konzentration ein geschätzter Wert der Konzentration ist und der geschätzte Wert unter Verwendung einer zuvor bestimmten Kalibrierbeziehung berechnet wird, wobei die Kalibrierbeziehung eine mathematische Beziehung zwischen der Intensität und der Konzentration definiert.

**16.** System (10) zum Schätzen einer Konzentration einer Spezies in einem Kulturmedium (12), wobei das Kulturmedium (12) biologische Partikel (32) aufweist und in der Lage ist, bei einer Änderung der Konzentration der Spezies die Farbe zu ändern,
wobei das System (10) umfasst:

- ein transparentes Substrat (14), das zur Aufnahme des Kulturmediums (12) geeignet ist,
- eine Lichtquelle (16), die geeignet ist, ein Lichtbündel (40) zum Beleuchten des Kulturmediums (12) abzustrahlen,
- einen Matrix-Photodetektor (18), der geeignet ist, ein Bild ($I_n$) des Kulturmediums (12) zu erfassen, wobei jedes Bild ($I_n$) durch eine Strahlung gebildet wird, die von dem beleuchteten Kulturmedium (12) durchgelassen wird, und mindestens ein elementares Beugungsmuster (50) umfasst, wobei jedes elementare Beugungsmuster (50) Wellen entspricht, die von einem biologischen Partikel (32) bei der Beleuchtung des Kulturmediums (12) gebeugt werden,
wobei das transparente Substrat (14) zwischen der Lichtquelle (16) und dem Matrix-Photodetektor (18) angeordnet ist, und
- eine Informationsverarbeitungseinheit (20), die angepasst ist, eine Schätzung der Konzentration der Spezies in dem Kulturmedium (12) abhängig von einer Intensität von Pixeln des erfassten Bildes ($I_n$) zu berechnen, wobei die Schätzung der Konzentration eine geschätzte Änderung der Konzentration ist, wobei die geschätzte Änderung durch Vergleichen der Intensität von Pixeln des erfassten Bildes ($I_n$) mit der eines Referenzbildes berechnet wird, wobei das Referenzbild aus einem vorbestimmten Bild und einem zuvor erfassten Bild des Kulturmediums ausgewählt wird.

**Claims**

1.  A method for estimating a concentration of a species in a culture medium (12) using an estimating system (10) including a light source (16), a transparent substrate (14) and a matrix photodetector (18), the transparent substrate (14) being located between the light source (16) and the matrix photodetector (18), the culture medium (12) including biological particles (32) and being able to change color when the concentration of the species varies, the method comprising the following steps:

    - placing (200) the culture medium (12) on the transparent substrate (14),
    - illuminating (200) the culture medium (12) using the light source (16),
    - acquiring (210) an image ($I_n$) of the culture medium (12) using the matrix photodetector (18), each image ($I_n$) being formed by a radiation transmitted by the illuminated culture medium (12) and including at least one elementary diffraction pattern (50) corresponding to waves diffracted by a biological particle (32) when the culture medium (12) is illuminated,
    - calculating (250) an estimate of the concentration of the species in the culture medium (12) from a pixel intensity of the acquired image ($I_n$), the estimate of the concentration being an estimated value of said concentration, the estimated value being calculated using a calibration relationship previously determined, the calibration relationship defining a mathematical relationship between the intensity and the concentration.

2.  A method for estimating a concentration of a species in a culture medium (12) using an estimating system (10) including a light source (16), a transparent substrate (14) and a matrix photodetector (18), the transparent substrate (14) being located between the light source (16) and the matrix photodetector (18), the culture medium (12) including biological particles (32) and being able to change color when the concentration of the species varies, the method comprising the following steps:

    - placing (200) the culture medium (12) on the transparent substrate (14),
    - illuminating (200) the culture medium (12) using the light source (16),
    - acquiring (210) an image ($I_n$) of the culture medium (12) using the matrix photodetector (18), each image ($I_n$) being formed by a radiation transmitted by the illuminated culture medium (12) and including at least one elementary diffraction pattern (50) corresponding to waves diffracted by a biological particle (32) when the culture medium (12) is illuminated,
    - calculating (250) an estimate of the concentration of the species in the culture medium (12) from a pixel intensity of the acquired image ($I_n$), the estimate of the concentration being an estimated variation of said concentration, said estimated variation being calculated by comparing the pixel intensity of the acquired image ($I_n$) with that of a reference image, the reference image being chosen from among a predetermined image and an image of the culture medium previously acquired.

3.  The method according to claim 1 or 2, wherein the light source (16) illuminates the transparent substrate (14) directly, and the image ($I_n$) is formed directly by the radiation transmitted by the illuminated transparent substrate (14), in the absence of a magnification lens positioned between the transparent substrate (14) and the matrix photodetector (18).

4.  The method according to any one of the preceding claims, wherein the concentration is chosen from among the group consisting of: the pH, a cell viability and a reactive oxygen species.

5.  The method according to any one of the preceding claims, wherein before the acquisition step (200), the method further comprises the following step:

    - introducing (120) a reagent into the culture medium to obtain a color change when the concentration varies.

6.  The method according to any one of the preceding claims, wherein after the acquisition step (210), the method further comprises the following steps:

- identifying (230) at least one elementary diffraction pattern (50) in the acquired image ($I_n$), and
- selecting (240) pixels located outside each identified elementary diffraction pattern (50),

the estimate of the concentration of the species in the culture medium then being calculated, during the calculating step (250), from the intensity of the selected pixels.

7. The method according to any one of the preceding claims, wherein after the acquisition step (210), the method further comprises the following step:

- selecting (220) a zone of interest (320) in the acquired image,

the estimate of the concentration of the species in the culture medium then being calculated, during the calculating step (250), from the intensity of the pixels of the selected zone of interest (320),
the selected zone of interest (320) preferably including at least one elementary diffraction pattern (50).

8. The method according to claims 6 and 7, wherein the step for selecting the zone of interest (220) is carried out before the identification step (230),
the identification (230) of the or each elementary diffraction pattern then being done in the selected zone of interest,
the selection (240) of pixels located outside each identified elementary diffraction pattern being done from among the pixels of the selected zone of interest, and
the estimate (250) of the concentration of the species in the culture medium then being calculated from the intensity of said selected pixels.

9. The method according to any one of the preceding claims, wherein the method further comprises a preliminary calibration step (110), during which a relationship between the intensity of the concentration is determined using a calibration medium having a given value of the concentration,
the calibration medium preferably having no biological particles.

10. The method according to claim 9, wherein, during the calibration step (110), the value of the concentration of the species in the calibration medium is modified according to different successive values, and the relationship between the intensity and the concentration is determined for the different successive values.

11. The method according to any one of the preceding claims, wherein before the acquisition step (210), the method further comprises the following step:

- placing (100) a filter (25) between the matrix photodetector (18) and the transparent substrate (14), the filter (25) being able to transmit only a predefined range of wavelengths,
- the predefined range of wavelengths preferably being determined based on a predefined value of the concentration.

12. The method according to any one of the preceding claims, wherein after the acquisition step (210), the method further comprises the following steps:

- identifying (230) at least one elementary diffraction pattern in the acquired image, and
- determining (260) a characteristic relative to each biological particle corresponding to a respective identified elementary pattern.

13. The method according to any one of the preceding claims, wherein the intensity taken into account during the calculating step is a mean value or a median value of the intensity of the considered pixels.

14. The method according to any one of the preceding claims, wherein the acquired image ($I_n$) is monochromatic.

15. A system (10) for estimating a concentration of a species in a culture medium (12), the culture medium (12) including biological particles (32) and being able to change color when the concentration of the species varies,
the system (10) comprising:

- a transparent substrate (14) configured for receiving the culture medium (12),
- a light source (16) configured for emitting a light beam (40) illuminating the culture medium (12),
- a matrix photodetector (18) configured for acquiring an image ($I_n$) of the culture medium (12), each image ($I_n$) being formed by a radiation transmitted by the illuminated culture medium (12) and including at least one elementary diffraction pattern (50) corresponding to waves diffracted by a biological particle (32) when the culture medium (12) is illuminated,
the transparent substrate (14) being located between the light source (16) and the matrix photodetector (18), and
- an information processing unit (20) configured for calculating an estimate of the concentration of the species in the culture medium (12) from a pixel intensity of the acquired image ($I_n$), the estimate of the concentration being an estimated value of said concentration, the estimated value being calculated using a calibration relationship previously determined, the calibration relationship defining a mathematical relationship between the intensity and the concentration.

16. A system (10) for estimating a concentration of a species in a culture medium (12), the culture medium (12) including biological particles (32) and being able to change color when the concentration of the species varies,
the system (10) comprising:

- a transparent substrate (14) configured for receiving the culture medium (12),
- a light source (16) configured for emitting a light beam (40) illuminating the culture medium (12),
- a matrix photodetector (18) configured for acquiring an image ($I_n$) of the culture medium (12), each image ($I_n$) being formed by a radiation transmitted by the illuminated culture medium (12) and including at least one elementary diffraction pattern (50) corresponding to waves diffracted by a biological particle (32) when the culture medium (12) is illuminated,
the transparent substrate (14) being located between the light source (16) and the matrix photodetector (18), and
- an information processing unit (20) configured for calculating an estimate of the concentration of the species in the culture medium (12) from a pixel intensity of the acquired image ($I_n$), the estimate of the concentration being an estimated variation of said concentration, said estimated variation being calculated by comparing the pixel intensity of the acquired image ($I_n$) with that of a reference image, the reference image being chosen from among a predetermined image and an image of the culture medium previously acquired.

FIG.1

FIG.2

Agencement d'un filtre entre le photodétecteur et le substrat — 100

Calibration de l'intensité pour la concentration de l'espèce considérée — 110

Introduction d'un réactif dans le milieu de culture — 120

Eclairement du milieu de culture — 200

Acquisition, par le photodétecteur matriciel, d'au moins une image du milieu de culture éclairé — 210

Sélection d'une zone d'intérêt dans l'image acquise — 220

Identification d'au moins une figure élémentaire de diffraction — 230

Sélection de pixels en dehors de chaque figure identifiée — 240

Calcul d'une estimation de la concentration — 250

Détermination d'une caractéristique relative à chaque particule correspondant à une figure identifiée — 260

## FIG.3

$I_{n1}$

50

340      <u>FIG.4</u>     330     320      350

340      330     350     $I_{n2}$

320

50

<u>FIG.5</u>

## FIG.6

## FIG.7

**EP 3 213 049 B1**

## RÉFÉRENCES CITÉES DANS LA DESCRIPTION

**Documents brevets cités dans la description**

- WO 2008090330 A1
- WO 9612962 A1
- WO 2014009519 A1